# EUROPEAN PATENT SPECIFICATION

(11) **EP 0 705 773 B1**
(45) Date of publication and mention of the grant of the patent: **02.02.2000**
(21) Application number: 95202657.3
(22) Date of filing: 03.10.1995
(51) Int. Cl.: B65D 90/50, E04H 7/00, G01M 3/02

(54) **Storage tank and method for detecting leaks in tank floors**
Lagertank und Verfahren zur Überwachung von Lecks in Tankböden
Réservoir de stockage et procédé pour la détection de fuites dans les fonds de réservoirs

(30) Priority: 03.10.1994 NL 9401619; 22.02.1995 NL 9500344
(43) Date of publication of application: 10.04.1996
(73) Proprietor: Raaphorst, Henry Alfons, 4731 AH Oudenbosch (NL); De Kruif, Cornelius Antonius, Nijlen (BE)
(72) Inventor: Raaphorst, Henry Alfons, 4731 AH Oudenbosch (NL); De Kruif, Cornelius Antonius, Nijlen (BE)
(74) Representative: Van Someren, Petronella F. H. M.

(56) References cited:
- EP-A- 0 547 717
- DE-A- 2 450 542
- DE-A- 3 230 437
- DE-A- 3 622 593
- US-A- 4 939 833

## Description

The present invention relates to a storage tank comprising a tank floor, one or more tank walls and a tank roof, wherein a spacer is arranged on the tank floor, the outer edge of which is gas and liquid tight connected to the wall to define a detection area between the spacer and the floor, which detection area is connected to detection means, and wherein the spacer is a profiled sheet.

Such a storage tank is disclosed in DE-A-36 22 593 wherein a detection area is obtained by applying a blister padding covered with a plastic layer the bottom of the tank.

Many steel storage tanks are used the world over in refineries, terminals, depots and chemical works. The capacity of such tanks can vary widely. Tanks for chemical products have a volume of 500 m³ for example whilst oil storage tanks can contain 100.000 m³. Above ground storage tanks consist of two main types, namely tanks with secured roofs which are used for less volatile products such as fuel oil and tanks with floating roofs for volatile products and crude oil.

Above ground storage tanks usually have no foundations. They are placed on a sand mound of 50 to 75 centimeters in height in order to keep them free of ground water and in order to yield enough suction clearance for pumps. The composition of the ground, especially alluvial grounds, which exists along rivers and at the sea for example, is such that large subsidences under the ground can take place due to the weight of the tank and its contents. The underground often subsides irregularly. The tank and its floor is thereby unevenly subjected to strain which can lead to damage and finally leakage.

When damage and leaks occurring in the tank floor are not detected in time, this can lead to serious contamination of the ground and possibly of the groundwater due to leaking of the tanks' contents into the ground. Even a very small opening over a long period of time can lead to a great deal of loss, which seriously affects the environment. This is of course highly undesirable and not only from an environmental viewpoint but also for the companies concerned since cleaning of contaminated soil is very expensive. Increasingly strict legal requirements for storage tanks and the like are currently put forward.

In order to detect tank floor leakage on time and to limit or prevent serious contamination of the ground and the groundwater, various matters have already been proposed. It is known to supply a tank with a double floor. Between the floors, sand or concrete can be arranged whereby damage and leaks in both the upper and lower floor do not lead directly to leakage of the tank's contents to the ground. The problem with such a double floor is however that an opening in the tank's sidewall must be made in order to arrange this. The sealing of the second floor with respect to the tank sidewall has become a weak point whereby due to uneven subsidence and/or temperature differences damage can occur relatively easy which leads to leakage. Moreover the removal of the upper floor plate of a double floor is practically impossible. When leakage occurs therein the mostly dangerous materials will collect together between the floor plates. Steel floor plates can only be removed after application of heat. This is naturally very dangerous with highly flammable materials.

Aside from this, it has been suggested to arrange a fluid tight skin under the floor of the tank. Such a skin can however easily tear due to uneven subsidence of the ground. Moreover for arranging such a skin the tank has to be jacked up. Such a jacking operation is naturally very expensive.

It is therefore the object of the present invention to yield a storage tank whereby the above mentioned problems are obviated.

According to the invention this is achieved in that the profiling consists of substantially half spherical elevations and recesses made in the sheet, wherein the recesses rest on the tank floor and the elevations form the roof of the detection area. Due to this form of the profiling, gasses and or liquids can move freely through the whole detection area. The detection area formed in this way is very thin. Thereby changes in the area will be very quickly detected and action can be taken in time. Moreover, hardly any stress and strain builds up in a spacer with the here above described profiling, which could also be described as an egg box profile.

A protective layer is preferably arranged on or over the spacer. This protective layer preferably extends beyond the spacer and butts up to the tank sidewall. Hereby a gas and fluid tight sealing of the detection area is ensured. Moreover an extra protection of the ground is herewith formed. When here damage occurs in the tank floor, the contents of the tank will not immediately leak away due to the presence of the protective layer, whilst the damage can already be detected and repaired.

The protective layer preferably forms a whole with the spacer since for the arranging of the protective layer, the spacer is provided with an adhesive primer. In this way the protective layer can adhere very well to the spacer.

In another embodiment of the invention, a second detection area can be defined between the protective layer and the spacer. In this instance the protective layer is preferably produced from a stiff material.

The spacer is preferably formed from a thin material, for example thin, stainless steel, synthetic material or any other suitable material. The material preferably has a compression strength of at least 2 kg/cm² and most preferably a minimum of 10 kg/cm². The advantage of using very thin and flexible material for the spacer is that the material can then be folded or rolled up to pass through the cover of the tank. In this way the tank remains intact. The occurrence of weak points in the tank sidewall or the floor are thereby avoided.

An underpressure preferably prevails in the detection area. The detection means are formed in such an instance by a pressure meter which can register the changes in the underpressure. The pressure meter is connected with a detection pipe which leads to the detection area through the tank floor. The passage of the detection pipe is preferably found in the floor of the tank as close as possible to the sidewall. In this manner only the digging of a small channel in the mound is necessary. By a leak in the tank floor or in the spacer, the vacuum, which prevails in the detection area, leaks away. This occurs directly, even with the smallest leak. Measures can then be taken immediately to seal the leak. Other means of detection are also however conceivable.

When any possible occurring damage is detected by means of the pressure meter, immediate determination of the place of leakage is possible. With a leak in the tank floor itself, the vacuum leaks away whereby the meter will detect an atmospheric pressure (0 bar pressure difference with the surroundings). When the leak occurs in the protective layer, not only will the vacuum leak away, but an overpressure will occur due to the fluid present in the tank. This overpressure is linked with the height of the liquid column in the tank. A height of 4 meters causes an overpressure of 0.4 bar.

A covering layer can possibly be arranged on the tank floor. In this manner, holes, spores and suchlike which are already present in the tank floor can be evened out and sealed off. A polyester resin can be arranged for example as the covering layer. With very bad floors, a layer of Fibaroll^{T}M, epoxy or suchlike can be arranged there above or there below. Further to the detection area, in this manner the already present tank floor can be improved. Extra covering layers can also be arranged over or against the spacer and/or over the protective layer. Especially preferable for covering layers, suitable for the tank contents, are products which are resistant to the tanks contents.

In an alternative embodiment of the invention, the detection area can be segmented for example by securing, according to a circle segment pattern, partitions to the tank floor. Since the detection area is preferably very thin, metal strips can be used as partitions for example which can be easily welded to the tank floor. On each segment, separate detection means can be arranged. In this way the position of the leak in the floor can be found. This is especially advantageous with large storage tanks.

The segmenting can also, in an alternative case, take the form of separate lanes. The different detection areas are then formed by placing a strip of the spacer on the floor, allowing the protective layer to extend beyond the edge of the spacer and securing this to the floor, for example with an adhesive primer, wherein subsequently the next spacer is placed alongside, preferably overlapping to a certain extent with the previous spacer. The protective layer associated with the second spacer passes beyond the overlap of both spacers and is secured to the protective layer of the first spacer. When desired, a filler material can be arranged at the weld points in order to smooth out the junction.

The protective layer is, in a preferred embodiment, preferably built up from two preferably non woven glass mats, which are impregnated with a resin. Such a protective layer is arranged for example, by firstly supplying a layer of resin wherein the glass mats are laid. Thereafter a last resin layer is arranged with a roller. The roller is used to remove air bubbles. Non woven glass mats are preferred since these have a larger stretch capacity than a glass fibre and thereby do not tear as quickly.

The resin can be any suitable material. Especially preferred is vinylester which is preferably as is above mentioned, reinforced with glass fibre.

The resin can be enforced for example with type E fibre glass and can contain a filler with a delayer and a starter. It is impermeable for water and offers resistance against a large number of acids, chemicals and solvents. Due to all these characteristics, it is especially suitable as a covering layer. Other covering layers can also however be used, such as the product Fibaroll^{T}M.

If desired, the protective layer can be provided with a top layer, which can be made anti-static by graphite addition for example.

A filler material is preferably arranged in the corner between the tank wall and the floor, whereby the substantially right angle is somewhat rounded off. This prevents tension building up in the protective layer which extends somewhat against the wall. The filler material is arranged before placement of the spacers and is in direct contact with the floor. Known materials can be used as filler material. Preferably after placement of the spacer and before the arrangement of the protective layer an adhesive tape is stuck onto the filler. The protective layer is arranged over the adhesive tape. By the occurrence of tension in the protective layer, the adhesive tape and the protective layer therewith, will be quickly released from the filler whereby tensions will once again be dampened and tears prevented. Moreover an area is created under the protective layer which can possibly come into contact with the detection area. If desired a part of the wall can thereby be controlled for leakage.

According to the invention, diverse combinations of covering layers, spacer and possible protective layers can be used. The choice is dependent, amongst other things, on the state of the tank floor and the tank contents.

The present invention has a large number of advantages. The arrangement of the detection system is technically more commercially advantageous than all the other existing systems. Moreover, three improvements can be brought about in one, namely a better resistance against certain chemicals than the original tank floors, due to the arrangement of a resistant synthetic layer, a very early detection of leakages, even before liquid leaks through the tank floor to the outside, and the improvement of existing bad tank floors due to the arrangement of a covering layer. The fitting time of the detection area according to the invention is markedly shorter than that of existing systems. Moreover the tank remains completely intact since all the necessary materials can be passed through the tank cover. Since the detection area is very thin, hardly any loss of area occurs in the tank. Moreover due to this thin detection area, a very quick detection is possible. Since a covering layer is preferably arranged on the tank floor, the floor is well protected against corrosion and the like and easier to clean. Apart from a quick detection of leaks, the formation thereof is resisted due to the extra measures according to the present invention.

The present invention will be further clarified referring to the accompanying drawings wherein corresponding numbers refer to corresponding parts and wherein is shown:
figure 1 a partly broken away perspective view of a storage tank according to the invention with a first type of segmented detection system;
figure 2 a cross section of the floor with a detection area and protective layers;
figure 3 a partly broken away perspective view of a part of the tank floor according to the invention with a filler material in the corner between the wall and the floor;
figure 4 a partly broken away perspective view showing the junction between two segments;
figure 5 a partly broken away perspective view of a storage tank according to the invention with a second type of segmented detection system; and
figure 6 a partly broken crossed sectional view of the floor of the tank from figure 5.

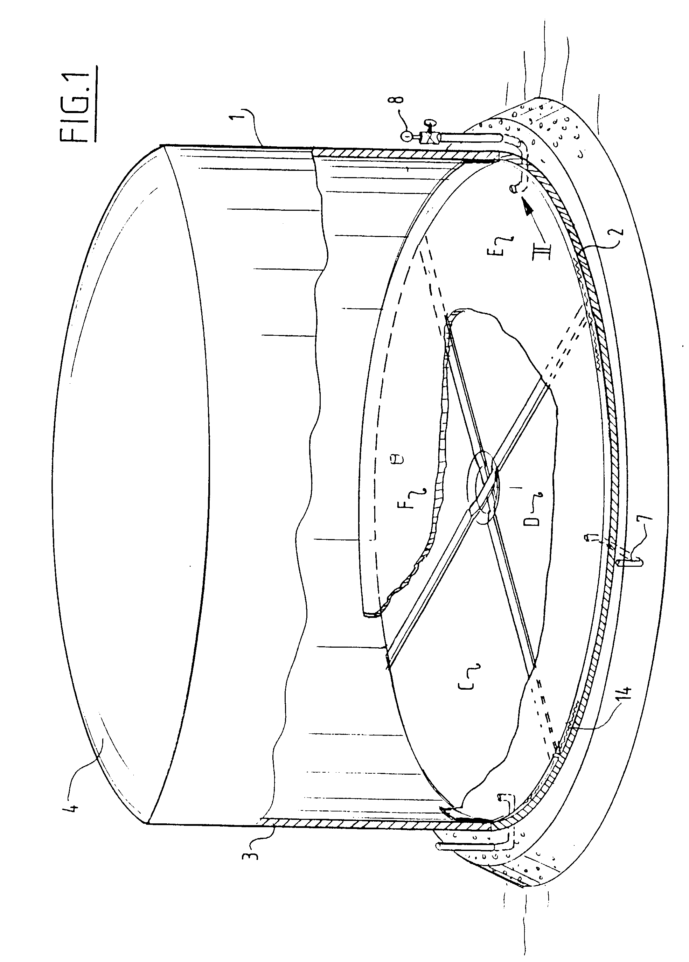

Figure 1 shows a storage tank 1 consisting of a tank floor 2, a tank wall 3 and a tank roof 4. On the floor 2, four radially extending strips are arranged whereby the detection area is broken up into four segments C, D, E and F. Each segment is independent from each other and is provided with a detection pipe 7 which opens up into the detection area 14. The detection pipe 7 is connected to detection means 8 arranged on the outer side of the tank.

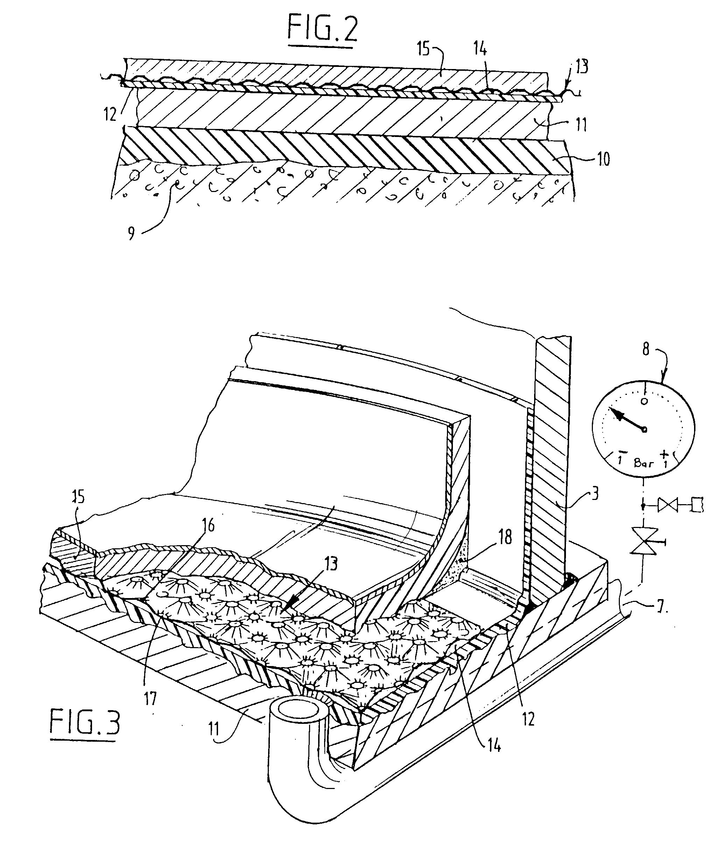

In figure 2 a schematic cross section of a tank floor according to the invention is shown provided with a detection area 14. On the tank mound 9 here shown, a bitumen layer 10 is to be found. A bitumen layer is not present however on all tank mounds 9. Above the bitumen layer, the tank floor 11 is placed. The tank floor shown here is still very even on its upper side and provided with a covering layer 12 whereon the profiled plate 13 is arranged. The profiled plate forms together with the tank floor 11, a detection area 14. The plate is sealed off with a protective layer 15 which follows the profile of the plate 13.

The detection area is to be better seen in figure 3. Here it is clearly seen that the profiling in the plate consists of a number of alternating elevations 16 and recesses 17. The recesses 17 rest on the covering layer 12 and therewith on the floor 11. The profile is such that a continuous detection area 14 is formed. On the detection area, a detection pipe 7 is arranged. The profiled plate is somewhat smaller than the tank floor and is sealed off by means of a protective layer 15, which preferably consists of two glass mats impregnated with resin, which extend somewhat against the sidewall 3 of the tank 1. The covering layer 12 of the floor, also extends against the sidewall 3 of the tank. In the junction between the floor 11 and the wall 3 an amount of filler material is arranged in order to somewhat round off the angle between the wall and floor. Adhesive tape, not shown, can be arranged on the filler. On top of the protective layer 15, a top layer 19 is found which can be made anti-static for example by the addition of graphite.

The detection pipe is connected with a pressure difference meter 8. An underpressure prevails in the detection area. In the case of an intact floor, the meter yields a value between 0 en -1 since there is a pressure difference with the outside air. With a leak in the tank floor, the vacuum leaks away and the difference between the detection area and outside is 0. When a leak occurs in the protective layer and the profiled plate, the vacuum also leaks away, but due to the fluid column in the tank, an overpressure will occur in the detection area. In this case, the meter gives a value between 0 and 1.

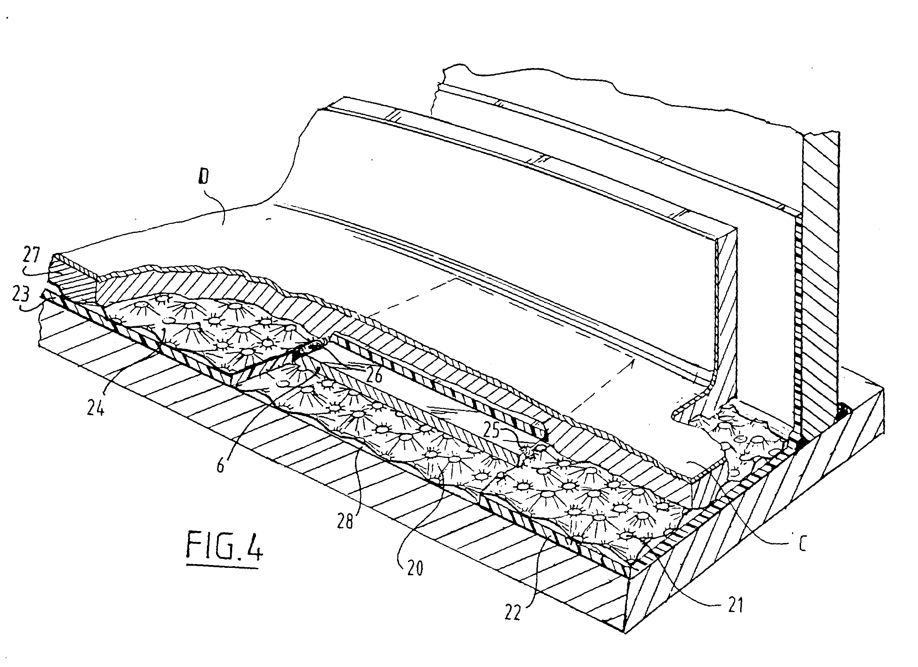

Figure 4 shows how the segmenting of the detection area is brought about. Firstly a narrow strip 20 of a profiled plate is placed directly onto the tank floor. Left from this strip, a detection segment D is found, right thereof C. Immediately adjacent, in C, a protective layer 22 is firstly arranged. Thereover a profiled plate 21 is placed. Over the strip 20 a flat strip 6 is lain. Over the flat strip a protective layer 23 is arranged which extends over the tank floor in D. In D a profiled plate 24 is laid over this protective layer 23. On the side of C, the flat strip 6 and the band 20 are only joined to the profiled plate 21 at a few points 25. On the side of D, a closed weld 26 is used. In this way it is possible to also subject the tank floor covered by band 20 to detection. The area 28 under the strip then forms part of the detection segment C. Subsequently a protective layer 27 is arranged over the profile plates 21 and 24 and strip 6.

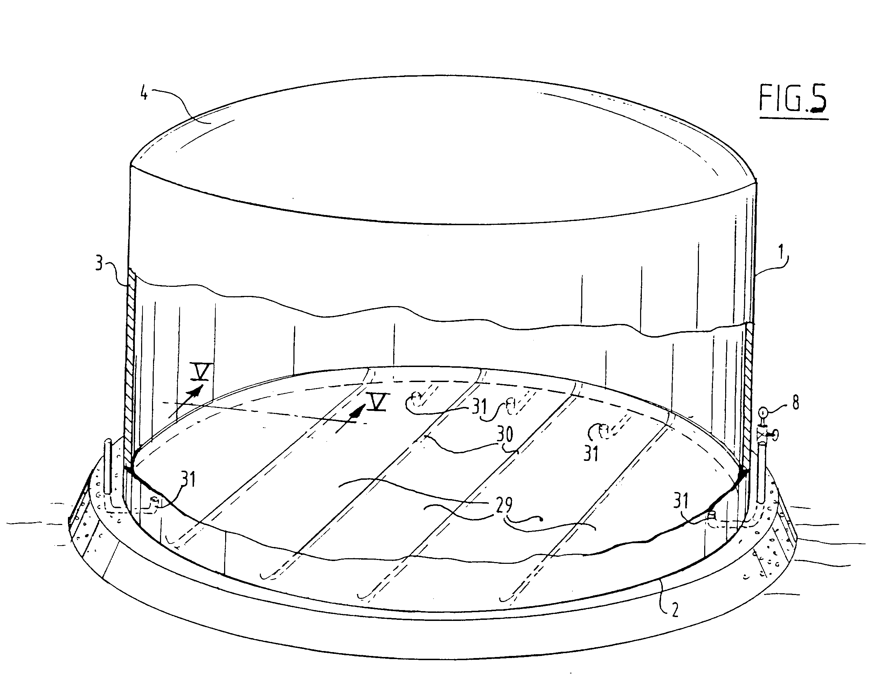

Figure 5 shows an alternative embodiment of a storage tank 1 with segmentation. On the floor of the tank a number of detection lanes 29 are arranged. A certain amount of overlap 30 exists between the lanes, in order to ensure complete detection. Each detection area is provided with its own detection pipe 31 which preferably opens out as close as possible to the wall 3. In this way only small channels in the mound have to be dug and the detection pipes can simply be pushed therethrough.

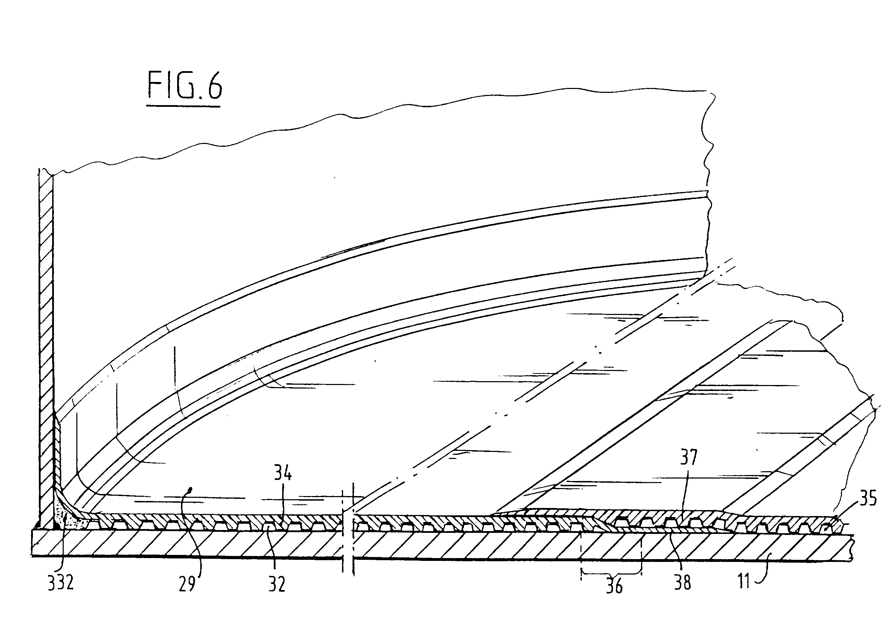

Figure 6 shows in detail the formation of the detection lanes 29 from figure 5. A first spacer 32 is arranged up to the filler 33. Thereover a protective layer 34 is arranged, which for example consists of two glass mats impregnated with resin which on its terminating end 38 is secured to the tank floor for example by means of an adhesive primer. In order to eventually obtain an upper side as flat as possible, the parts of the glass mats, which are placed on the tank floor, can be somewhat unravelled. The subsequent spacer 35 is placed with an overlap 36 next to and partially over the first spacer 32 and sealed off with protective layer 37 which extends beyond the spacer. The edges of the glass mat can also here be unravelled.

The present invention makes it possible in a quick and simple way to arrange a leak detection system in new or existing storage tanks. Since the material used can be passed into the tank folded or rolled up via the tank cover, the tank can be kept completely intact. Apart from a small channel for taking up of the detection pipe, no direct work under the tank is necessary. Jacking up of the tank is therefore not necessary.

## Claims

1. Storage tank (1) comprising a tank floor (2, 11), one or more tank walls (3) and a tank roof (4), wherein a spacer (13, 20, 21, 24, 32, 35) is arranged on the tank floor (2, 11), the outer edge of which is gas and liquid tight connected to the wall (3) to define a detection area (14) between the spacer (13, 20, 21, 24, 32, 35) and the floor (2, 11), which detection area (14) is connected to detection means (8), and wherein the spacer (13, 20, 21, 24, 32, 35) is a profiled sheet, characterized in that the profiling consists of substantially half spherical elevations (16) and recesses (17) made in the sheet, wherein the recesses (17) rest on the tank floor (2, 11) and the elevations (16) form the roof of the detection area (14).

2. Storage tank according to claim 1, characterized in that a protective layer (15, 27, 34, 37) is arranged on the spacer (13, 20, 21, 24, 32, 35) for sealing the detection area (14).

3. Storage tank according to claim 2, characterized in that the protective layer (15, 27, 34, 37) follows the profile of the spacer (13, 20, 21, 24, 32, 35).

4. Storage tank according to claim 2, characterized in that the protective layer (15, 27, 34, 37) is produced from a stiff material to define a second detection area between the protective layer (15, 27, 34, 37) and the spacer (13, 20, 21, 24, 32, 35).

5. Storage tank according to one of the previous claims, characterized in that the spacer (13, 20, 21, 24, 32, 35) is produced from stainless steel or synthetic material.

6. Storage tank according to one of the previous claims, characterized in that an underpressure prevails in the detection area (14), that the detection means (8) are formed by a pressure meter (8) for determining the changes in the prevailing underpressure in the detection area (14) and that the pressure meter (8) is connected with a detection pipe (7, 31) which leads to the detection area (14) through the tank floor (2, 11).

7. Storage tank according to one of the previous claims characterized in that an air and liquid tight layer (12) is mounted between the floor (11) and the spacer (13).

8. Storage tank according to one of the previous claims, characterized in that the detection area (14) is segmented and each segment (C, D, E, F) is individually connected to detection means (8).

## Patentansprüche

1. Lagertank (1) mit einem Tankboden (2, 11), Tankwänden (3) und einer Tankabdeckung bzw. einem Tankdach (4), wobei ein Abstandhalter (13, 20, 21, 24, 32, 35) auf dem Tankboden (2, 11) angeordnet ist, wobei dessen Außenrand gas- und flüssigkeitsdicht mit der Wand (3) verbunden ist, um zwischen dem Abstandhalter (13, 20, 21, 24, 32, 35) und dem Boden (2, 11) einen Überwachungsbereich (14) zu definieren, wobei der Überwachungsbereich (14) mit Überwachungsmitteln (8) verbunden ist und wobei der Abstandhalter (13, 20, 21, 24, 32, 35) ein profilierter Bogen ist, dadurch gekennzeichnet daß die Profilierung aus im wesentlichen halbrunden bzw. -sphärischen Erhebungen (16) und Vertiefungen (17) besteht, die in dem Bogen gebildet sind, wobei die Vertiefungen (17) auf dem Tankboden (2, 11) ruhen und die Erhebungen (16) die Abdeckung bzw. das Dach des Überwachungsbereichs (14) bilden.

2. Lagertank nach Anspruch 1, dadurch gekennzeichnet, daß eine Schutzschicht (15, 27, 34, 37) zum Zwecke des Abdichtens des Überwachungsbereichs (14) auf dem Abstandhalter (13, 20, 21, 24, 32, 35) angeordnet ist.

3. Lagertank nach Anspruch 2, dadurch gekennzeichnet, daß die Schutzschicht (15, 27, 34, 37) dem Profil des Abstandhalters (13, 20, 21, 24, 32, 35) folgt.

4. Lagertank nach Anspruch 2, dadurch gekennzeichnet, daß die Schutzschicht (15, 27, 34, 37) aus einem steifen Material hergestellt ist, um einen zweiten Überwachungsbereich zwischen der Schutzschicht (15, 27, 34, 37) und dem Abstandhalter (13, 20, 21, 24, 32, 35) zu definieren.

5. Lagertank nach einem der vorstehenden Ansprüche, dadurch gekennzeichnet, daß der Abstandhalter (13, 20, 21, 24, 32, 35) aus rostfreiem Stahl oder synthetischem Material hergestellt ist.

6. Lagertank nach einem der vorstehenden Ansprüche, dadurch gekennzeichnet, daß in dem Überwachungsbereich (14) ein Unterdruck vorherrscht, daß die Überwachungsmittel (8) durch einen Druckmesser (8) zur Bestimmung der Änderungen des vorherrschenden Unterdrucks in dem Überwachungsbereich (14) gebildet sind und daß der Druckmesser (8) mit einem Meßrohr (7, 31) verbunden ist, das durch den Tankboden (2, 11) zu dem Überwachungsbereich (14) führt.

7. Lagertank nach einem der vorstehenden Ansprüche, dadurch gekennzeichnet, daß eine luft- und flüssigkeitsdichte Schicht (12) zwischen dem Boden (11) und dem Abstandhalter (13) montiert ist.

8. Lagertank nach einem der vorstehenden Ansprüche, dadurch gekennzeichnet, daß der Überwachungsbereich (14) segmentiert bzw. aufgeteilt ist und jedes Segment (C, D, E, F) individuell mit Überwachungsmitteln (8) verbunden ist.

## Revendications

1. Réservoir de stockage (1) comportant un fond de réservoir (2, 11), des parois de réservoir (3) et un toit de réservoir (4), dans lequel un écarteur (13, 20, 21, 24, 32, 35) est agencé sur le fond de réservoir (2, 11), dont le bord extérieur est relié de manière étanche aux gaz et aux liquides à la paroi (3) pour définir une zone de détection (14) située entre l'écarteur (13, 20, 21, 24, 32, 35) et le fond (2, 11), laquelle zone de détection (14) est reliée à des moyens de détection (8), et dans lequel l'écarteur (13, 20, 21, 24, 32, 35) est une feuille profilée, caractérisée en ce que le profil est constitué sensiblement d'éminences semi-sphériques (16) et de creux (17) réalisés dans la feuille, les creux (17) étant en appui sur le fond de réservoir (2, 11) et les éminences (16) formant le toit de la zone de détection (14).

2. Réservoir de stockage selon la revendication 1, caractérisé en ce qu'une couche de protection (15, 27, 34, 37) est agencée sur l'écarteur (13, 20, 21, 24, 32, 35) pour assurer l'étanchéité de la zone de détection (14).

3. Réservoir de stockage selon la revendication 2, caractérisé en ce que la couche de protection (15, 27, 34, 37) suit le profil de l'écarteur (13, 20, 21, 24, 32, 35).

4. Réservoir de stockage selon la revendication 2, caractérisé en ce que la couche de protection (15, 27, 34, 37) est produite à partir d'un matériau rigide pour définir une seconde zone de détection située entre la couche de protection (15, 27, 34, 37) et l'écarteur (13, 20, 21, 24, 32, 35).

5. Réservoir de stockage selon l'une quelconque des revendications précédentes, caractérisé en ce que l'écarteur (13, 20, 21, 24, 32, 35) est produit à partir d'un acier inoxydable ou d'un matériau synthétique.

6. Réservoir de stockage selon l'une quelconque des revendications précédentes, caractérisé en ce qu'une dépression prévaut dans la zone de détection (14), en ce que les moyens de détection (8) sont formés par un dispositif de mesure de pression (8) pour déterminer les changements de dépression prédominante dans la zone de détection (14) et en ce que le dispositif de mesure de pression (8) est relié à un tuyau de détection (7, 31) qui aboutit à la zone de détection (14) à travers le fond (2, 11) du réservoir.

7. Réservoir de stockage selon l'une quelconque des revendications précédentes, caractérisé en ce qu'une couche étanche à l'air et aux liquides (12) est montée entre le fond (11) et l'écarteur (13).

8. Réservoir de stockage selon l'une quelconque des revendications précédentes, caractérisé en ce que la zone de détection (14) est segmentée et chaque segment (C, D, E, F) est relié individuellement aux moyens de détection (8) .
